# EUROPEAN PATENT APPLICATION

(11) **EP 3 923 367 A1**
(43) Date of publication of application: **15.12.2021**
(21) Application number: 20752757.3
(22) Date of filing: 15.01.2020
(51) Int. Cl.: H01M 2/02, H01M 2/04, H01M 2/08, H01M 2/10, F16J 15/10, H05K 5/06

(54) **SEAL STRUCTURE**

(30) Priority: 04.02.2019 JP 2019018237
(71) Applicant: NOK Corporation, Tokyo 105-8585 (JP)
(72) Inventor: ONO, Tasuku, Aso-shi, Kumamoto 8692231 (JP)
(74) Representative: Global IP Europe Patentanwaltskanzlei
(86) International application number: PCT/JP2020/001049
(87) International publication number: WO 2020/162122

(57) **Abstract**

A sealing structure which can more simply and securely hold a gasket on a battery case as attached member is provided. A sealing structure 100 includes a gasket 110 and an attachment wall 120. The gasket 110 is arranged along an upper end side of a side wall 11 of a battery case 10. The gasket 110 includes a seal lip 112 arranged on an upper end side of the gasket to be in contact with a cover 20 for covering an opening side of the battery case 10. The attachment wall 120 is fastened to the side wall 11 of the battery case 10. The attachment wall 120 includes an accommodation portion 124 and a placement surface 120a. The accommodation portion 124 accommodates the gasket 110 between the side wall 11 and the attachment wall. The placement surface 120a is arranged on an outer peripheral side of the attachment wall to be in tight contact with a lower end 21a of an engagement portion 21 arranged on an outer edge of the cover 20.

## Description

### FIELD

The present disclosure relates to a sealing structure.

### BACKGROUND

With the development of e-Mobility, battery case gaskets which seal against leakage from a gap between a battery case for accommodating a battery for vehicles (e.g., electric car) and a cover for covering the battery case are under development. The battery case gaskets have a long peripheral length and a large plan view shape corresponding to a size of such a battery case. For this reason, because it is difficult to form such a long battery case gasket by press forming, the battery case gasket is necessarily formed by extrusion.

Extruded parts which are formed by extrusion have a fixed shape along their peripheral length. Accordingly, in order to attach such a gasket, the extruded part is necessarily subjected to additional processing, or a groove or the like for holding the gasket is additionally formed on a member to which the gasket is attached. An example of the related art of gasket attachment is provided by Japanese Patent Laid-Open Publication No. 2012-122536 which discloses a gasket of extruded part having through holes for bolt insertion. Another example is provided by Japanese Patent Laid-Open Publication No. 2017-172756 which discloses a sealing structure having a circular groove formed on a member to which the gasket is attached.

### BRIEF SUMMARY

### TECHNICAL PROBLEM

Additional processing in which through holes or the like are formed on the extruded part as gasket is laborious and increases its cost. On the other hand, in the case in which the member to which the gasket is attached is formed by press forming, a space on which a gasket attachment groove is formed cannot be sufficiently provided, or the member to which the gasket is attached is necessarily additionally subjected to additional processing in which a groove or the like is formed. For these reasons, a sealing structure is required to more simply and securely hold a gasket on an attached member such as battery case.

An object of the present disclosure is to provide a sealing structure which can more simply and securely hold a gasket on an attached member.

### SOLUTION TO PROBLEM

A sealing structure according to the present disclosure includes
a gasket arranged along an upper end side of a side wall of a battery case, and includes a seal lip arranged on an upper end side of the gasket to be in tight contact with a cover for covering an opening side of the battery case; and
an attachment wall fastened to the side wall of the battery case, the attachment wall including
   an accommodation portion that accommodates the gasket between the side wall and the attachment wall, and
   a placement surface arranged on an outer peripheral side of the attachment wall to be in contact with a lower end of an engagement portion arranged on an outer edge of the cover.

### ADVANTAGEOUS EFFECTS

According to a sealing structure of the present disclosure, a gasket can be more simply and securely held on an attached member.

### BRIEF DESCRIPTION OF DRAWINGS

Fig. 1 is a plan view entirely showing the construction of a sealing structure according to a first embodiment.
Fig. 2 is a perspective view showing the construction of a principal part of the sealing structure according to the first embodiment.
Fig. 3 is a cross-sectional view showing the construction of a principal part of the sealing structure according to the first embodiment.
Fig. 4 is a perspective view showing the construction of a principal part of a sealing structure according to a second embodiment.
Fig. 5 is a cross-sectional view showing the construction of a principal part of the sealing structure according to the second embodiment.

### DETAILED DESCRIPTION

### FIRST EMBODIMENT

The following description will describe sealing structures according to preferred embodiments. It is noted that the scope of the present disclosure defined by claims attached hereto is not limited to these embodiments. Not all the components described in the description of the embodiments are essential components for the solution means of the present disclosure.

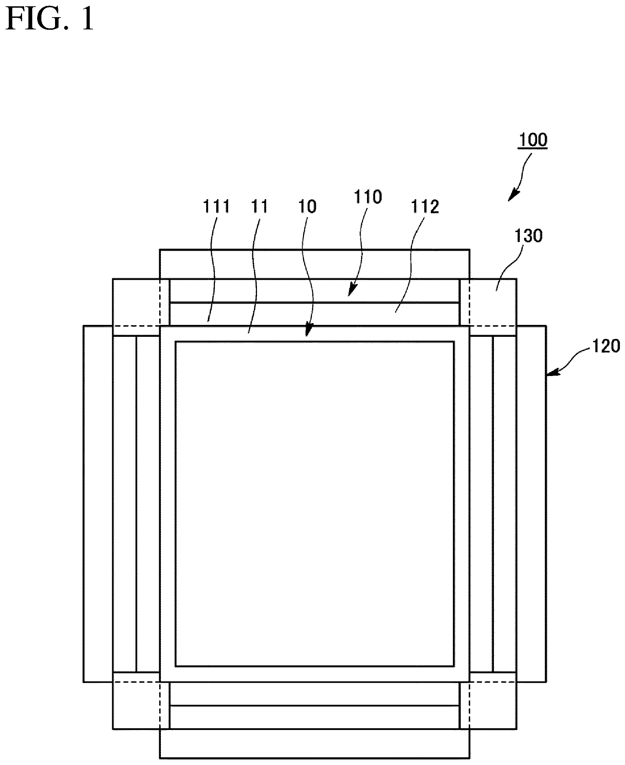

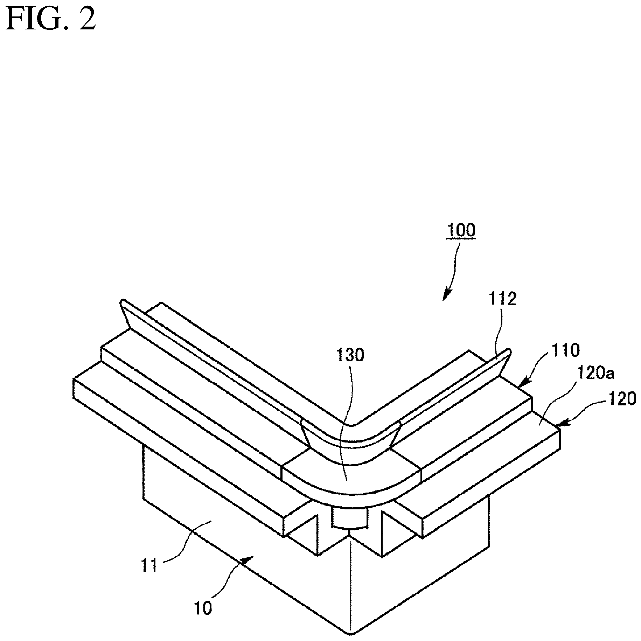

The schematic construction of a sealing structure according to a first embodiment is first schematically described with reference to Figs. 1 and 2. Fig. 1 is a plan view showing the sealing structure according to this embodiment which is attached to the battery case. Fig. 2 is a perspective view showing a part of the sealing structure according to this embodiment including a coupling portion.

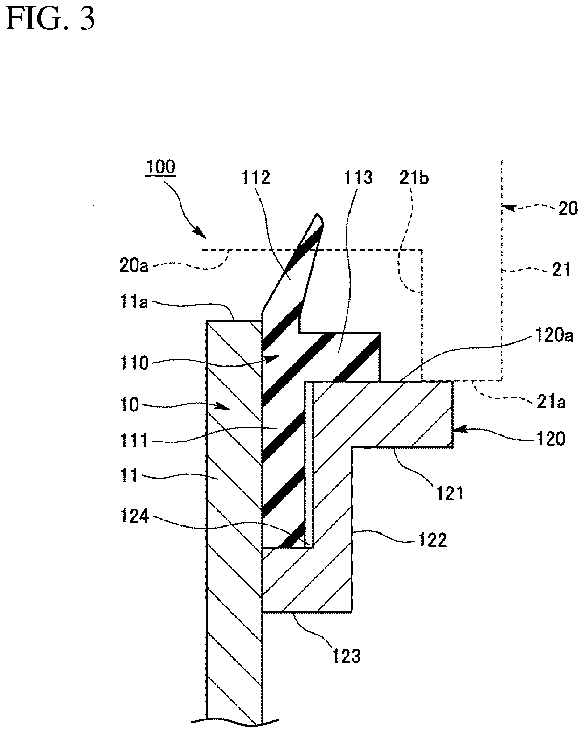

The sealing structure 100 is a gasket for a battery case which seals leakage from a gap between a battery case 10 and a covers 20 which covers the battery case 10 (see Fig. 3), for example. The battery case 10 accommodates a vehicle battery which is mainly used for vehicles such as electric car, fuel-cell car, and hybrid car. The sealing structure 100 according to this embodiment is arranged on an opening side of the battery case 10 as shown in Fig. 1. The sealing structure 100 includes a gasket 110, welded walls 120, and coupling portions 130.

The gasket 110 is held on the battery case 10. The gasket 110 provides hermeticity between the battery case 10 and the cover 20 (see Fig. 3). The gasket 110 is an extruded part which is formed of a rubber-like elastic material having a rubber hardness degree not higher than 70 by extrusion. Exemplary rubber-like elastic materials can be provided by a rubber material, a synthetic resin material having rubber-like elasticity, and the like.

The gasket 110 according to this embodiment includes gasket main bodies 111 which extend along their corresponding edge of the battery case 10 on the opening side as shown in Fig. 1. The gasket main bodies 111 have a liner elongated shape, and a fixed sectional shape along their entire length. The ends of the gasket main bodies 111 are fitted into the coupling portions 130 so that the gasket main bodies 111 are coupled to each other by the coupling portions 130. The coupling portions 130 are formed of rubber or the like. Accordingly, the gasket 110 has a rectangular frame shape.

The gasket 110 according to this embodiment is arranged along side walls 11 of the battery case 10 on their upper end sides as shown in Figs. 1 and 2. In addition, the gasket 110 includes first seal lips 112 on its upper end side. The first seal lips 112 will be brought in tight contact with the cover 20 which covers the opening side of the battery case 10 (see Fig. 3). The construction of the gasket 110 according to this embodiment will be discussed in more detail later.

The welded walls 120 are a bar-shaped member which is formed of metal such as steel and has an angular cross-sectional shape. The welded walls 120 are fastened onto the side walls 11 of the battery case 10 on their exterior sides. The welded walls 120 serve as an attachment wall which holds the gasket 110 and positions the cover 20. When the battery case 10 is covered by the cover 20, the welded walls 120 according to this embodiment are attached so that a placement surface 120a will contact a lower end 21a of an engagement portion 21 on the outer edge of the cover 20 (see Fig. 3). The welded walls 120 according to this embodiment are fastened onto the side wall 11 of the battery case 10 by welding from the exterior side.

The construction of a principal part of the sealing structure according to this embodiment is now described with reference to Fig. 3. Fig. 3 is a cross-sectional view illustrating a positional relationship between the gasket and the welded wall of the sealing structure according to this embodiment which are attached to the battery case, and the cover taken along a line perpendicular to a length direction of the gasket main body.

The sealing structure 100 according to this embodiment achieves sealing performance mainly in the vertical direction between the battery case 10 and the cover 20 by producing a small reactional force. As shown in Fig. 3, the metal welded walls 120 are fastened onto parts of the side walls 11 of the battery case 10 in proximity to their upper ends 11a by welding from the exterior side. Also, the gasket 110 is held along the exterior sides of the upper ends 11a of the side walls 11 of the battery case 10 by the welded walls 120 which serve as the attachment wall. The seal lips 112 are arranged on the upper end side of the gasket 110, and will be brought in tight contact with the cover 20. The cover 20 covers the opening side of the battery case 10.

The gasket 110 according to this embodiment includes the gasket main bodies 111 and supported portions 113 as shown in Fig. 3. The first seal lips 112 are arranged on the upper end sides of the gasket main bodies 111. The first seal lips 112 are elastically deformed by producing a small reactional force so that the first seal lips 112 will be brought in tight contact with a ceiling surface 20a of the cover 20. The supported portion 113 extends in a horizontal direction from the upper end side of the gasket main body 111, and is supported by the placement surface 120a of the welded wall 120 as the attachment wall. That is, the gasket main body 111 of the gasket 110 according to this embodiment is formed as extruded part which has the first seal lip 112 and the supported portion 113 on the upper end side of the gasket main body 111 when being formed by extrusion so that the gasket main body 111 can be easily fastened along the upper end 11a of the side wall 11 of the battery case 10 by the welded wall 120 without any adhesive.

The gasket main body 111 supports the first seal lip 112 on its upper end side. The first seal lips 112 provide hermeticity between the battery case 10 and the ceiling surface 20a of the cover 20. The gasket main body 111 according to this embodiment is accommodated in an accommodation portion 124 which is arranged in the welded wall 120. The first seal lip 112 which extends from the upper end 11a of the side wall 11 is positioned in a space in which the first seal lip 112 can be elastically deformed when the gasket main body 111 is held along the upper end side of the side wall 11 of the battery case 10 by the welded wall 120.

The supported portion 113 is supported by the placement surface 120a of the welded wall 120. Accordingly, the gasket main body 111 is stably held in the accommodation portion 124 of the welded wall 120. The supported portion 113 extends along the placement surface 120a to a position near an inner peripheral surface 21b of the engagement portion 21 of the cover 20.

Although the supported portion 113 which extends in a horizontal direction from the upper end side of the gasket main body 111 is illustratively described in this embodiment, the supported portion 113 may be omitted in the gasket 110.

The welded wall 120 serves as the attachment wall which is fastened onto the side wall 11 by welding from the exterior side so that the gasket 110 is held along the upper end side of the side wall 11 of the battery case (attached member) 10. The welded wall 120 according to this embodiment includes a placement portion 121, an intermediate wall portion 122, and a bottom portion 123 as shown in Fig. 3. The placement portion 121 is arranged on the outer edge side of the welded wall 120 so that the placement surface 120a will contact the lower end 21a of the engagement portion 21 which is arranged on the outer edge of the cover 20. The intermediate wall portion 122 and the bottom portion 123 define the accommodation portion 124 for accommodating the gasket main body 111. The welded wall 120 has an angular cross-sectional shape.

When the battery case 10 is covered by the cover 20, the welded walls 120 according to this embodiment are attached so that the placement surface 120a will contact the lower end 21a of the engagement portion 21 on the outer edge of the cover 20. That is, the welded walls 120 easily position the cover 20, and additionally prevent reduction of the sealing performance caused by an excess load of the weight of the cover 20 applied to the first seal lips 112 of the gasket 110.

As discussed above, in the sealing structure 100 according to this embodiment, the welded wall 120 as the attachment wall for holding the gasket 110 are fixedly attached onto the exterior part of the battery case (attached member) 10 in proximity to the upper ends 11a of the side walls 11 by welding. For this reason, the gasket 110 can be securely held on the side walls 11 of the battery case (attached member) 10 by a simple structure without additional processing in which fastening through holes, protrusions or the like are formed on the gasket 110 of extruded part formed by extrusion.

In particular, in order to reliably achieve sealing performance in the vertical direction between the battery case 10 and the cover 20 by producing a smaller reactional force whereby reducing unevenness of hermeticity, the first seal lip (sealing means) 112 is arranged on the upper end side of the gasket main body 111 in the gasket 110 according to this embodiment. To this end, in order to prevent an excess load by the weight of the cover 20 applied to the first seal lips 112, the welded walls 120 serve to position the cover 20.

### SECOND EMBODIMENT

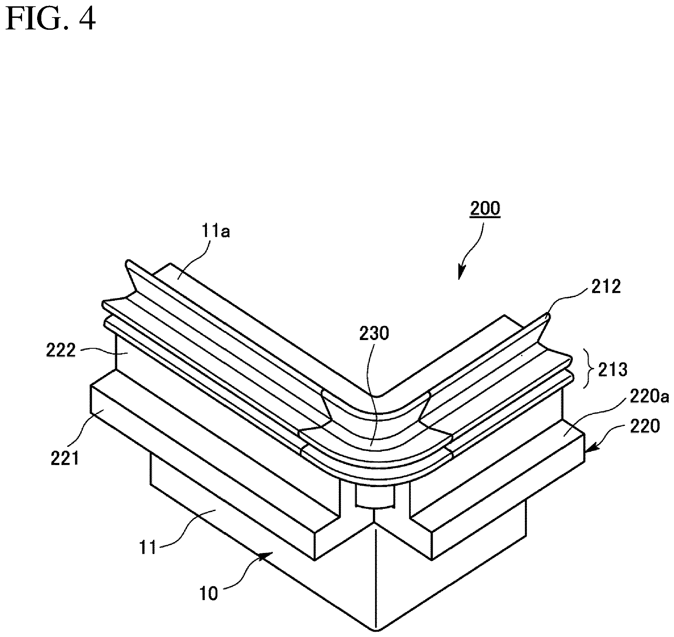

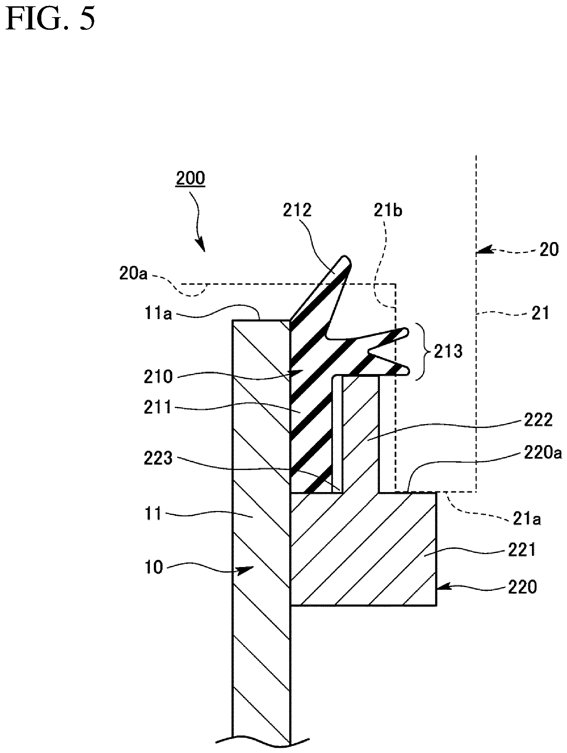

The construction of a sealing structure according to a second embodiment is now schematically described with reference to Figs. 4 and 5. Fig. 4 is a perspective view showing a part of the sealing structure according to this embodiment including a coupling portion. Fig. 5 is a cross-sectional view illustrating a positional relationship between the gasket and the welded wall of the sealing structure according to this embodiment which are attached to the battery case, and the cover taken along a line perpendicular to a length direction of the gasket main body.

The sealing structure 200 according to this embodiment achieves sealing performance mainly in the vertical and horizontal directions between the battery case 10 and the cover 20 by producing a small reactional force. The sealing structure 200 includes a gasket 210, welded walls 220, and coupling portions 230 as shown in Fig. 4. The gasket 210 is arranged on the opening side of the battery case 10. The gasket 210 is an extruded part which is formed of a rubber-like elastic material having a rubber hardness degree not higher than 70 by extrusion. The welded walls 220 are formed of metal such as steel. The coupling portion 230 is formed of a synthetic resin or the like.

The metal welded walls 220 are fastened onto parts of the side walls 11 of the battery case 10 in proximity to their upper ends 11a by welding from the exterior side. Also, the gasket 210 is held along the exterior sides of the upper ends 11a of the side walls 11 of the battery case 10 by the welded walls 220 which serve as the attachment wall. The seal lips 212 and 213 are arranged on the upper end side of the gasket 210. The seal lips 212 and 213 will be brought in tight contact with the cover 20 which covers the opening side of the battery case 10.

The gasket 210 according to this embodiment includes the first seal lips 212, the second seal lips 213, and the gasket main bodies 211 as shown in Fig. 5. The first seal lips 212 will be brought in tight contact with the ceiling surface 20a of the cover 20. The second seal lips 213 will be brought in tight contact with the inner peripheral surface 21b of the engagement portion 21 which is arranged on the outer edge of the cover 20. The first seal lip 212 and the second seal lips 213 are arranged on the upper end side of the gasket main body 211. That is, the gasket main body 211 of the gasket 210 according to this embodiment is formed as extruded part which has the first seal lip 212 and the second seal lips 213 on the upper end side of the gasket main body 211 when being formed by extrusion so that the gasket main body 211 can be easily fastened along the upper end 11a of the side wall 11 of the battery case 10 by the welded wall 220 without any adhesive.

The gasket main body 211 supports the first seal lip 212 and the second seal lips 213 on its upper end side. The first seal lips 212 provide hermeticity between the battery case 10 and the ceiling surface 20a of the cover 20. The second seal lips 213 provide hermeticity between the battery case 10 and the inner peripheral surfaces 21b of the engagement portions 21 of the cover 20. The gasket main body 211 according to this embodiment is accommodated in an accommodation portion 223 which is arranged in the welded wall 220. The first seal lip 212 which extends from the upper end 11a of the side wall 11 is positioned in a space in which the first seal lip 212 can be elastically deformed when the gasket main body 111 is held along the upper end side of the side wall 11 of the battery case 10 by the welded wall 220.

The welded wall 220 serves as the attachment wall which is fastened onto the side wall 11 by welding from the exterior side so that the gasket 210 is held along the upper end side of the side wall 11 of the battery case (attached member) 10. The welded wall 220 according to this embodiment includes a placement portion 221 and a partitioning wall portion 222 as shown in Fig. 5. The placement portion 221 has a placement surface 220a on its exterior side which will contact the lower end 21a of the engagement portion 21 arranged on the outer edge of the cover 20. The placement portion 221 includes the accommodation portion 223 on its interior side which accommodates the gasket main body 211. The partitioning wall 222 separates the placement surface 220a and the accommodation portion 223 from each other. The welded wall 220 has an inverted T shape as viewed in a cross section.

When the battery case 10 is covered by the cover 20, the welded walls 220 according to this embodiment are attached so that the placement surface 220a contacts the lower end 21a of the engagement portion 21 on the outer edge of the cover 20. That is, the welded walls 220 easily position the cover 20, and additionally prevent reduction of the sealing performance caused by an excess load of the weight of the cover 20 applied to the first seal lips 212 of the gasket 210.

As discussed above, in the sealing structure 200 according to this embodiment, the welded wall 220 as the attachment wall for holding the gasket 210 are fixedly attached onto the exterior part of the battery case (attached member) 10 in proximity to the upper ends 11a of the side walls 11 by welding. For this reason, the gasket 210 can be securely held onto the side walls 11 of the battery case (attached member) 10 by a simple structure without additional processing in which fastening through holes, protrusions or the like are formed on the gasket 210 of extruded part formed by extrusion.

In particular, in order to reliably achieve sealing performance in the vertical and horizontal directions between the battery case 10 and the cover 20 by producing a smaller reactional force whereby reducing unevenness of hermeticity, the first seal lip (sealing means) 212 and the second seal lips (seal means) 213 are arranged on the upper end side of the gasket main body 211 in the gasket 210 according to this embodiment. To this end, in order to prevent an excess load by the weight of the cover 20 applied to the first seal lips 212, the welded walls 220 serve to position the cover 20. In addition, according to this embodiment, even in the case in which the engagement portion 21 of the cover 20 is long, the second seal lips 213 can provide hermeticity between the battery case 10 and the inner peripheral surface 21b of the engagement portion 21 of the cover 20.

Although the attachment walls of the sealing structures according to the foregoing embodiments have been described to include the welded wall which is fastened by welding, means for fastening the attachment wall onto the side wall of the battery case is not limited to welding. For example, in the case in which both the battery case and the attachment wall are formed of a rigid resin or the like, the attachment wall may be fastened onto the battery case by other fastening means such as adhesive or thermocompression bonding.

As discussed above, in the sealing structures according to the foregoing embodiments, in order to fasten the gasket and position the cover, the welded walls as the attachment wall of the gasket which have a desired shape are fastened onto the side walls of the battery case by welding from the exterior side. As a result, the gasket can be securely held onto the side walls of the battery case as the attached member by a simple structure without additional processing in which fastening through holes, protrusions or the like are formed on the gasket of extruded part formed by extrusion.

Also, according to the sealing structures of the foregoing embodiments, the gasket can be held in place and provide sealing effects without forming grooves or the like for holding the gasket on the side walls of the battery case by presswork. For this reason, according to the sealing structures of the foregoing embodiments, the gasket of extruded part which is formed by extrusion is not necessarily subjected to additional processing, and grooves or the like for holding the gasket are not required to be formed on the side walls of the battery case as the attached member to which the gasket is attached.

In addition, sealing performance between the battery case and the cover in the vertical direction or the vertical and horizontal directions which is obtained by producing a small reactional force can be surely achieved by a simple structure and simple method. As a result, in the case in which the sealing structure according to each embodiment is applied to gaskets for battery cases to be used for vehicles such as electric cars, the workability and attachment performance of a gasket for battery cases can be improved. Therefore, the sealing structure according to the embodiment has great value in industry.

Although the sealing structures of the foregoing embodiments have been described above in detail, it will be easily understood by a person skilled in the art that various changes can be made. For example, a term that is stated together with a different term used in a broader sense of the term or synonymous with the term at least once in the specification or the drawings can be replaced by the different term in other statements in the specification or the drawings. Also, the construction and operation of the sealing structure are not limited to the foregoing embodiments but various changes can be made.

### Reference Signs List

- 10 ...: Battery Case
- 11 ...: Side Wall
- 11a ...: Side Wall Upper End
- 20 ...: Cover
- 20a ...: Ceiling Surface
- 21 ...: Engagement Portion
- 21a ...: Engagement Portion Lower End
- 21b ...: Engagement Portion Inner Peripheral Surface
- 100, 200 ...: Sealing Structure
- 110, 210 ...: Gasket
- 111, 211 ...: Gasket Main Body
- 112, 212 ...: First Seal Lip (Seal Lip)
- 113 ...: Supported Portion
- 120, 220 ...: Welded Wall (Attachment Wall)
- 120a, 220a ...: Attachment Wall Placement Surface
- 121, 221 ...: Placement Portion
- 122 ...: Intermediate Wall Portion
- 123 ...: Bottom Portion
- 124, 223 ...: Accommodation Portion
- 213 ...: Second Seal Lip
- 222 ...: Partitioning Wall
- 130, 230: Coupling Portion

## Claims

1. A sealing structure comprising:
a gasket arranged along an upper end side of a side wall of a battery case, and includes a seal lip arranged on an upper end side of the gasket to be in tight contact with a cover for covering an opening side of the battery case; and
an attachment wall fastened to the side wall of the battery case, the attachment wall including
an accommodation portion that accommodates the gasket between the side wall and the attachment wall, and
a placement surface arranged on an outer peripheral side of the attachment wall to be in contact with a lower end of an engagement portion arranged on an outer edge of the cover.

2. The sealing structure according to claim 1, wherein
the gasket includes
a first seal lip configured to be in tight contact with a ceiling surface of the cover,
a gasket main body that has an upper end side on which the first seal lip is arranged, and is accommodated in the accommodation portion, and
a supported portion extending in a horizontal direction from the upper end side of the gasket main body, is the supported portion being supported by the placement surface.

3. The sealing structure according to claim 1, wherein
the gasket includes
a first seal lip configured to be in tight contact with a ceiling surface of the cover,
a second seal lip configured to be in tight contact with an inner peripheral surface of the engagement portion arranged on the outer edge of the cover, and
a gasket main body that has an upper end side on which the first and second seal lips are arranged, and is accommodated in the accommodation portion.

4. The sealing structure according to any one of claims 1 to 3, wherein the attachment wall is a welded wall configured to be fastened onto the side wall of the battery case by welding.

5. The sealing structure according to any one of claims 1 to 4, wherein the gasket is an extruded part formed of a rubber-like elastic material having a rubber hardness degree not higher than 70.

6. The sealing structure according to any one of claims 2 to 5, wherein
the gasket includes a plurality of the gasket main bodies, and
the sealing structure further includes coupling portions that couple the plurality of gasket main bodies to each other.

7. The sealing structure according to any one of claims 2 to 6, wherein the gasket main body has a linear shape.
